# EUROPÄISCHE PATENTSCHRIFT

(11) **EP 4 254 684 B1**
(45) Veröffentlichungstag und Bekanntmachung des Hinweises auf die Patenterteilung: **18.03.2026**
(21) Anmeldenummer: 22210573.6
(22) Anmeldetag: 30.11.2022
(51) Int. Cl.: H01R 25/14, B60M 1/30

(54) **DEHNVERBINDER FÜR EINE SCHLEIFLEITUNG UND SCHLEIFLEITUNG**
EXPANSION CONNECTOR FOR A CONDUCTOR LINE AND CONDUCTOR LINE
RACCORD DE DILATATION POUR LIGNE DE CONTACT ET LIGNE DE CONTACT

(30) Priorität: 31.03.2022 DE 102022107703
(43) Veröffentlichungstag der Anmeldung: 04.10.2023
(73) Patentinhaber: Conductix-Wampfler GmbH, 79576 Weil am Rhein (DE)
(72) Erfinder: Hagin, Moritz, 79576 Weil am Rhein (DE); Kreiter, Frank, 79429 Malsburg (DE); Lang, Dietmar, 79418 Schliengen (DE); Maier, Bernd, 79418 Schliengen (DE)
(74) Vertreter: Charrier Rapp & Liebau

(56) Entgegenhaltungen:
- CN-A- 101 823 446
- DE-A1- 102019 114 553
- DE-A1- 3 013 111
- US-B1- 9 407 079

## Beschreibung

Die Erfindung betrifft einen Dehnverbinder zur Verbindung von Schleifleitungsprofilen einer Schleifleitung nach dem Oberbegriff des Anspruchs 1 sowie eine Schleifleitung nach dem Oberbegriff des Anspruchs 15.

Aus der DE 197 55 513 A1 ist ein Dehnverbinder für aufeinanderfolgende Stromschienen einer Schleifleitung bekannt, wobei die Stromschienen aus einem Metallprofil mit einer Längshohlkammer sowie mit einer zwischen zwei vorkragenden Profilflanschen vorgesehenen Schleiffläche und aus einem das Metallprofil mit Ausnahme der Schleiffläche ummantelnden Kunststoffprofil aufgebaut sind. Der Dehnverbinderbesteht aus einer die zugeordneten Enden der Stromschienen aufnehmenden, deren Schleifflächen freilassenden Kunststoffaufnahme, in der die beiden Enden der Stromschienen jeweils zwischen zwei Anschlägen relativ zueinander längsverschiebbar sind. Dabei sind die Metallprofile der beiden Stromschienen elektrisch miteinander verbunden. Ein solcher Dehnverbinder ist besonders einfach handhabbar, wenn die Kunststoffaufnahme in Höhe der Längshohlkammer der beiden Stromschienen einen Quersteg aufweist, der auf beiden Seiten jeweils mit einem durchlaufenden Metallsteg belegt ist, wenn die beiden Metallstege senkrecht zur Längsrichtung und zum Quersteg auseinanderfedernd beaufschlagt sind und wenn der Quersteg mit den beiden Metallstegen letztere mit Gleitkontakt in die Längshohlkammern eingreift.

Aus der DE 10 2019 114 553 A1 ist ein Dehnverbinder zum Verbinden von zwei in eine Längsrichtung L einer Schleifleitung aufeinanderfolgenden Stromschienen bekannt, welcher ein in das Ende einer der Stromschienen einsteckbares Buchsenteil mit einer in Längsrichtung L verlaufenden Verbindungsöffnung und ein in das Ende der anderen, zu verbindenden Stromschiene einsteckbares Steckerteil mit einem in Längsrichtung L verlaufenden Verbindungsstecker aufweist, wobei der Verbindungsstecker zur Herstellung einer elektrischen Verbindung in Längsrichtung L in die Verbindungsöffnung einsteckbar ist. Über einen solchen Dehnverbinder können lediglich relativ kurze Entfernungen zwischen den Schleifleitungsenden überbrückt werden. Gerade bei langen Schleifleitungen können sich aber die vor allem durch Temperaturschwankungen entstehenden Längenänderungen notwendigen Dehnspalte zwischen einzelnen Schleifleitungsenden zu größeren Abständen aufsummieren. Wird der Dehnspalt zwischen den beiden Schleifleitungsenden zu groß, besteht die Gefahr, dass der für die Stromübertragung notwendig Kontaktbereich zwischen Schleifleitungskontakt und Stromschiene zu kurz wird.

Aus der DE 30 13 111 A1 ist ein Dehnverbinder für Stromschienen bekannt, die über ein längs ihrer Schleifflächen verschiebbares Stromabnehmerschleifstück verfügen, dessen Breite die der Schleifflächen nicht überschreitet. Zur Überbrückung der einander zugewandten Endbereiche der Stromschienen ist im Abstand von der Ebene der Schleifflächen eine Längsstabanordnung vorgesehen, deren Endteile in zugeordneten Endbereichen der Schienen verschiebbar geführt sind. Zwischen den Endbereichen der Stabanordnung ist mindestens ein Kontaktflächenzwischenstück vorgesehen. Jedes Endteil ist in seinem zugeordneten Endbereich um eine begrenzte Länge verschiebbar. Diese Länge überschreitet nicht den offenen Abstand zwischen den Stromschienenenden und dem benachbarten Zwischenstück bei vorgezogenem Endteil.

Die US 9,407,079 B1 und die CN 101823446 A zeigen weitere Verbindungselemente für Schleifleitungsprofile.

Aufgabe der Erfindung ist es deshalb, einen Dehnverbinder zur Verbindung von zwei Stromschienen einer Schleifleitung bereitzustellen, der einfach und schnell montierbar sowie möglichst kompakt ist und dabei eine sichere elektrische Verbindung zwischen zwei aufeinanderfolgenden Stromschienen, insbesondere ohne zusätzlich Kabel- oder Leitungsverbindungen, bereitstellt und einen möglichst großen Längsausgleich der Stromschienen bei weitgehend unterbrechungsfreier Führung des an der Stromschiene verfahrenden Schleifleitungskontakts eines Stromabnehmers zulässt.

Die Erfindung löst diese Aufgabe durch einen Dehnverbinder mit den Merkmalen des Anspruchs 1 sowie eine Schleifleitung mit den Merkmalen des Anspruchs 15. Vorteilhafte Ausgestaltungen und zweckmäßige Weiterbildungen der Erfindung sind in den abhängigen Ansprüchen angegeben.

Ein eingangs genannter Dehnverbinder ist erfindungsgemäß gekennzeichnet durch den kennzeichnenden Teil von Anspruch 1.

Weiter können vorteilhaft zwischen dem Zwischenteil und dem ersten Anschlussteil und/oder dem zweiten Anschlussteil ein oder mehrere weitere Zwischenteile zur Einstellung weiterer Dehnspalte zwischen benachbarten Anschlussteilen und Zwischenteilen bzw. benachbarten Zwischenteilen untereinander angeordnet sein. Hierdurch lässt sich der zu überbrückende Dehnabstand zwischen zwei Anschlussteilen nochmals vergrößern, ohne die einzelnen Dehnspalte zu groß machen zu müssen, so dass keine gute und/oder kontinuierlich elektrisch leitende Führung des Schleifkontakts bzw. der Antenne sichergestellt ist.

Um ein Auseinanderziehen der Anschlussteile und der Zwischenteile besser zu verhindern, sind zwischen den Anschlussteilen und dem oder den Zwischenteilen und/oder den Zwischenteilen untereinander in Längsrichtung bewegliche Anschlagsverbindungen vorgesehen. Erfindungsgemäß weisen die Anschlagsverbindungen hierzu die Dehnspalte in Längsrichtung begrenzende Anschläge auf.

Dabei können vorteilhaft die Anschlagsverbindungen jeweils einen in Längsrichtung verlaufenden Führungskanal und einen in Längsrichtung verlaufenden Anschlagskanal aufweisen, durch die ein in Längsrichtung darin bewegliches Anschlagselement mit einem im Anschlagskanal verlaufenden Anschlag und einem im Führungskanal verlaufenden Gleitabschnitt vorgesehen ist. Weiter kann vorteilhaft der Anschlagskanal im Querschnitt eine größeren Weite aufweisen als der Führungskanal, insbesondere einen größeren Durchmesser. Bevorzugt kann mindestens einer der Führungskanäle und Anschlagskanäle in dem ersten oder zweiten Anschlussteil und das zugehörige Führungselement an dem oder den Zwischenteilen angeordnet sein, oder umgekehrt, oder auch in beliebiger sinnvoller Kombination.

Weiter können vorteilhaft zwischen den Anschlussteilen und dem oder den Zwischenteilen und/oder den Zwischenteilen untereinander mindestens eine in Längsrichtung bewegliche elektrische Verbindung, insbesondere Steckverbindung vorgesehen sein. Dabei kann die elektrische Steckverbindung vorteilhaft mindestens einen an dem oder den Zwischenteilen angeordneten, in die Längsrichtung verlaufenden Stecker aufweisen, der in eine an einem der Anschlussteile angeordnete Steckerbuchse einsteckbar ist, oder umgekehrt oder auch in beliebiger sinnvoller Kombination. Ggf. kann die elektrische Steckverbindung mindestens einen an einem der Zwischenteile angeordneten, in die Längsrichtung verlaufenden Stecker aufweisen, der in eine an einem anderen der Zwischenteile angeordnete Steckerbuchse einsteckbar ist.

Bevorzugt können die Länge von Stecker und Steckerbuchse in Längsrichtung so aneinander angepasst sein, dass der Stecker bei maximalem Dehnspalt zwischen dem Zwischenteil und dem zugehörigen Anschlussteil bzw. Zwischenteil zumindest noch teilweise in der Steckerbuchse steckt.

Weiter kann vorteilhaft der Stecker auf seiner der Steckerbuchse abgewandten Seite zum Einsetzen in eine entsprechende in Längsrichtung verlaufende Steckeraufnahme am Zwischenteil oder an einem der Anschlussteile ausgebildet ist. Hierzu kann vorteilhaft die Steckeraufnahme ein durch das Zwischenteil durchgehender Kanal, insbesondere Durchgangsbohrung, oder ein einseitig offener Kanal, insbesondere Sacklochbohrung, sein. Bevorzugt kann der Stecker eine Einschraubhilfe zum Einschrauben in die Steckeraufnahme aufweisen, wobei weiter vorteilhaft die Einschraubhilfe in Längsrichtung über das Zwischenteil oder das Anschlussteil, in das der Stecker eingeschraubt ist, übersteht, wobei an dem zugeordneten Anschlussteil oder Zwischenteil in Längsrichtung ein Rücksprung für die Einschraubhilfe vorgesehen ist.

Vorteilhaft können die Schleifleitungsprofile, das erste Anschlussteil, das zweite Anschlussteil und das oder die Zwischenteile jeweils miteinander fluchtende trogförmige Schleifabschnitte zur Kontaktierung mit einem in Längsrichtung der Schleifleitung verfahrenden Schleifkontakt aufweisen. Bevorzugt können sich die Enden einer oder mehrerer der Schleifabschnitte zumindest teilweise trichterförmig aufweiten. Weiter können vorteilhaft das erste Anschlussteil und das zweite Anschlussteil auf ihrer in Längsrichtung dem oder den Zwischenteilen abgewandten Seite jeweils eine Schleifleitungsprofilaufnahme zur Befestigung des ersten bzw. zweiten Schleifleitungsprofils aufweisen. Zudem kann vorteilhaft die Schleifleitungsprofilaufnahme quer zur Längsrichtung einen an die Außenkontur des Schleifleitungsprofils angepassten, insbesondere U-förmigen Querschnitt haben. Weiter kann die Schleifleitungsprofilaufnahme an ihrem dem oder den Zwischenteilen zugewandten Ende eine quer zur Längsrichtung verlaufende Stirnwand als Längsanschlag für das aufzunehmende Schleifleitungsprofil aufweisen.

Bevorzugt können die Schleifleitungsprofile als Schlitzhohlleiter mit einem in Längsrichtung verlaufenden Längsschlitz zur Aufnahme einer am Stromabnehmer angeordneten, in Längsrichtung der Schleifleitung verfahrbaren Antenne ausgebildet sind, wobei Seitenwandungen des Längsschlitzes mit entsprechenden Seitenwandungen jeweils miteinander fluchtender trogförmiger Schleifabschnitte des ersten Anschlussteils, des zweiten Anschlussteils und des oder der Zwischenteile fluchten.

Eine eingangs genannte Schleifleitung ist erfindungsgemäß dadurch gekennzeichnet, dass das erste Schleifleitungsprofil und das zweite Schleifleitungsprofil mit einem oben und nachfolgend beschriebenen und in den Ansprüchen angegebenen Dehnverbinder verbunden sind.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine schematische dreidimensionale Ansicht auf einen Endabschnitt einer erfindungsgemäßen Schleifleitung mit erfindungsgemäßem Dehnverbinder;
- **Fig. 2**: eine schematische dreidimensionale Explosionsansicht eines erfindungsgemäßen Dehnverbinders;
- **Fig. 3**: eine Untersicht auf einen erfindungsgemäßen Dehnverbinder in vollständig auseinandergezogener Stellung;
- **Fig. 4**: eine Seitenansicht auf den Dehnverbinder aus Fig. 3;
- **Fig. 5**: eine Schnittansicht durch den Dehnverbinder aus Fig. 4 längs der Schnittlinie A-A;
- **Fig. 6**: eine Schnittansicht durch den Dehnverbinder aus Fig. 4 längs der Schnittlinie B-B;
- **Fig. 7**: eine Schnittansicht durch den Dehnverbinder aus Fig. 4 längs der Schnittlinie C-C;
- **Fig. 8**: eine Untersicht auf den erfindungsgemäßen Dehnverbinder entsprechend Fig. 3 in vollständig zusammengeschobener Stellung;
- **Fig. 9**: eine Seitenansicht auf den Dehnverbinder aus Fig. 8;
- **Fig. 10**: eine Schnittansicht durch den Dehnverbinder aus Fig. 9 längs der Schnittlinie D-D;
- **Fig. 11**: eine Schnittansicht durch den Dehnverbinder aus Fig. 9 längs der Schnittlinie E-E;
- **Fig. 12**: eine Untersicht auf einen alternativen erfindungsgemäßen Dehnverbinder in vollständig auseinandergezogener Stellung;
- **Fig. 13**: eine Seitenansicht auf den alternativen Dehnverbinder aus Fig. 12;
- **Fig. 14**: eine Schnittansicht durch den alternativen Dehnverbinder aus Fig. 13 längs der Schnittlinie F-F;
- **Fig. 15**: eine Schnittansicht durch den alternativen Dehnverbinder aus Fig. 13 längs der Schnittlinie G-G;

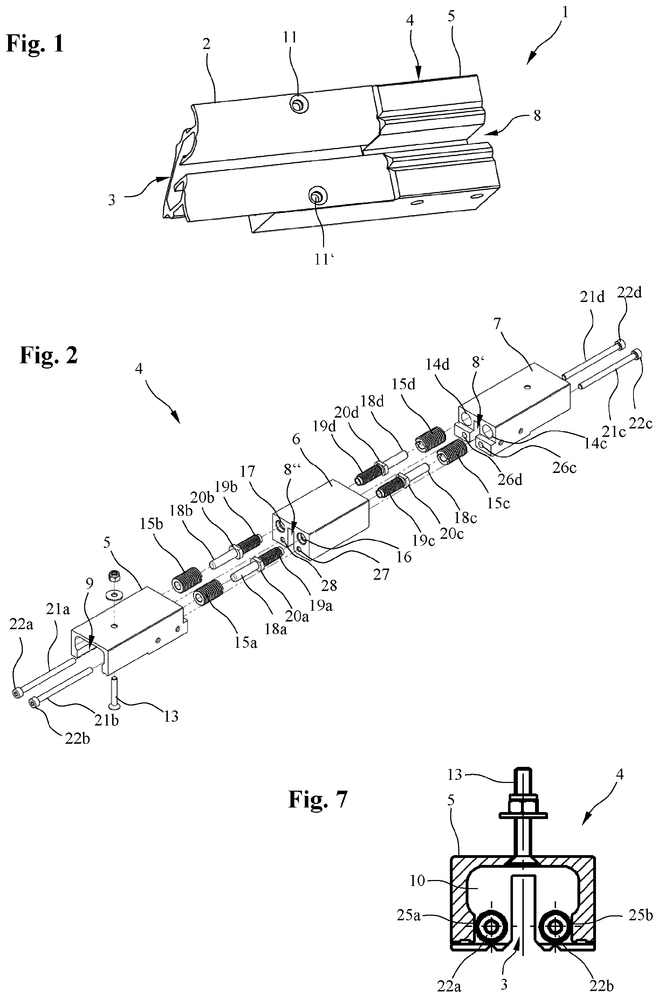

Fig. 1 zeigt eine schematische dreidimensionale Ansicht einer erfindungsgemäßen Schleifleitung 1 mit einem Endabschnitt eines ersten Schleifleitungsprofil 2, das einen in eine Längsrichtung L der Schleifleitung 1 verlaufenden Längsschlitz mit einem nach innen zu einem Hohlraum offenen Schleifabschnitt 3 aufweist. Üblicherweise ist eine Schleifleitung 1 aufgrund ihrer Länge aus einer Vielzahl sich aneinander anschließender Schleifleitungsprofile 2 zusammengesetzt. Das Schleifleitungsprofil 2 besteht aus einem, bevorzugt relativ weichen, elektrisch gut leitenden Material, insbesondere aus Metall wie z.B. Aluminium oder Kupfer. Es können aber auch andere elektrisch leitende Materialien verwendet werden.

In der in Fig. 1 gezeigten Ausgestaltung ist das Schleifleitungsprofil 2 zugleich als an sich bekannter Schlitzhohlleiter ausgebildet. Ebenso kann aber auch ein reines Schleifleitungsprofil für die elektrische Energieübertragung verwendet werden, bei dem der Längsschlitz 3 in an sich bekannter Weise als unten geschlossener U- bzw. trogförmiger Schleifabschnitt ausgebildet ist.

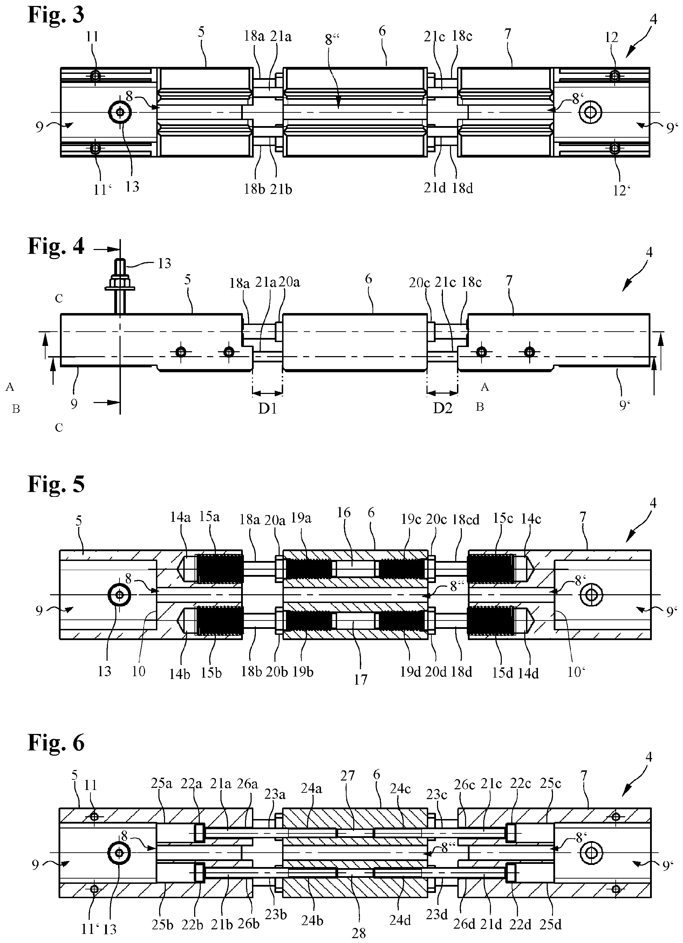

Die Schleifleitung 1 dient in an sich bekannter Weise zur Versorgung eines in ihrer Längsrichtung L daran verfahrbar oder beweglich angeordneten elektrischen Verbrauchers mit elektrischer Energie und/oder zur Datenübertragung. Hierzu weist der Verbraucher einen Stromabnehmer mit mindestens einem Schleifstück auf, das in dem trogförmigen Schleifabschnitt 3 entlang gleitet und die elektrische Verbindung zwischen Verbraucher und Schleifleitung 1 herstellt, und/oder für den Fall der Datenübertragung eine im Längsschlitz 3 verfahrenden Antenne. Das Schleifstück des Stromabnehmers bzw. die Antenne kann von in Fig. 4, 6, 8 und 13 unten in den trogförmigen Schleifabschnitt Längsschlitz 3 eingesetzt werden und darin längs des Schleifleitungsprofil 4 bewegt werden.

Die Ausgestaltungen des Verbrauchers, des Stromabnehmers, der Antenne und des Schleifstücks sind hinlänglich bekannt, so dass auf eine zeichnerische Darstellung verzichtet wurde. Ebenfalls nicht gezeichnet wurden elektrische nicht leitfähige Isolierprofile, welche das Schleifleitungsprofil 2 umgeben können.

Um das Schleifleitungsprofil 2 mit einem nicht gezeichneten weiteren Schleifleitungsprofil sowohl elektrisch als auch mechanisch zu verbinden, ist ein detailliert in Fig. 2 bis 11 gezeigter Dehnverbinder 4 vorgesehen, wobei aus Gründen der besseren Darstellbarkeit das Schleifleitungsprofil 2 in diesen Zeichnungen ausgeblendet wurde.

Der Dehnverbinder 4 dient vor allem dazu, bei in erster Linie temperaturbedingter Ausdehnung bzw. Stauchung der beiden Schleifleitungsprofile 2 in Längsrichtung L eine sichere elektrische Verbindung der Schleifleitungsprofile 2 untereinander mit entsprechendem Längenausgleich und eine möglichst gleichmäßige und unterbrechungsfreie Kontaktierung und Stromversorgung des in den Schleifleitungsprofilen 2 verfahrenden Schleifkontakts beim Überfahren der Verbindungsstelle zwischen den Schleifleitungsprofilen 2 und dem Dehnverbinder 4 zu erreichen.

Der Dehnverbinder 4 weist hierzu ein erstes Anschlussteil 5, ein sich in Längsrichtung L daran anschließendes Zwischenteil 6 und ein sich weiter in Längsrichtung L daran anschließendes zweites Anschlussteil 7 auf. Die Anschlussteile 5, 7 wie auch das Zwischenteil 6 sind aus einem elektrisch gut leitenden Material hergestellt.

Wie aus Fig. 1 und 3, sowie 7 gut erkennbar, weisen die Anschlussteile 5, 7 sowie das Zwischenteil 6 miteinander fluchtende Längsschlitze in Form von trog- bzw. U-förmigen Schleifabschnitten 8, 8' und 8" für den Schleifkontakt bzw. die Antenne des Stromabnehmers auf.

Da die Anschlusselement 5 und 7 identisch ausgebildet und bezüglich des Zwischenteils 6 lediglich spiegelverkehrt angeordnet sind, wird im Weiteren vor allem Bezug auf das erstes Anschlussteil 5 genommen, entsprechende Ausführungen gelten dann auch für das zweites Anschlussteil 7, wobei die Bezugszeichen beim zweiten Anschlussteil 7 denen des ersten Anschlussteils 5 ergänzt um einen Apostroph entsprechen, sofern nichts anderes angegeben.

Das Anschlussteil 5 weist eine besonders in Fig. 4, 5, 9 und 10 gut erkennbare Schleifleitungsprofilaufnahme 9 auf, die einen quer zur Längsrichtung L U-förmigen Querschnitt aufweist. In die Schleifleitungsprofilaufnahme 9 ist ein in Fig. 1 von oben bzw. von in Fig. 3 von unten eingesetzter Endabschnitt des Schleifleitungsprofils 2 eingesetzt, der mit seinem in Längsrichtung L stirnseitigen Ende an eine die Schleifleitungsprofilaufnahme 9 abschließende, quer zur Längsrichtung L verlaufende Stirnwand 10 anschlägt.

Um das Schleifleitungsprofil 2 fest mit dem ersten Anschlussteil 5 zu verbinden, sind in Fig. 1 erkennbare Befestigungsschrauben 11, 11' vorgesehen, welche in in den Fig. 2, 5,7 und 10 erkennbare Bohrungen eingeschraubt sind. Entsprechend finden sich am zweiten, in Längsrichtung L entgegengesetzten zweiten Anschlussteil 7 Befestigungsbohrungen 12, 12', welche einen in eine Schleifleitungsprofilaufnahme 9' eingelegten Endabschnitt des nicht gezeichneten weiteren Schleifleitungsprofils am zweiten Anschlussteil 7 festlegen. Die Befestigung des Schleifleitungsprofils 2 am ersten Anschlussteil 5 erfolgt dabei derart, dass ein dauerhafter direkter elektrischer Kontakt zwischen den elektrisch leitenden Schleifleitungsprofils 2 und dem ersten Anschlussteil 5 bereitgestellt wird. Anstelle von Befestigungsschrauben 11, 11' können auch andere Befestigungsarten verwendet werden, beispielweise Schnappverbindungen, Klemmen, Kontaktfedern o.ä.

Um den Schleifkontakt vom Schleifleitungsprofil 2 über den Dehnverbinder 4 zum zweiten Schleifleitungsprofil 2 möglichst ungestört und mit beständigem elektrischen Kontakt verfahren zu können, weisen das erste und zweite Anschlussteil 5, 7 und das Zwischenteil 6 einen an den Querschnitt des Schleifleitungsprofils 2 angepassten Querschnitt auf, insbesondere was die als trogförmige Schleifabschnitte 8, 8', 8" ausgebildeten Längsschlitze betrifft. Da sowohl die Schleifabschnitte 8, 8', 8" des Dehnverbinders 4 miteinander als auch die Schleifabschnitte 8, 8" mit den Längsschlitzen 3 der sich anschließenden Schleifleitungsprofile 2 fluchten, kann ein in von dem ersten Schleifenleitungsprofil 2 über den Dehnverbinder 4 zum weiteren Schleifleitungsprofil verfahrender Schleifleitungskontakt ohne Probleme die Schnittstellen zwischen dem Schleifabschnitt 3 des ersten Schleifleitungsprofil 2 und dem ersten Schleifabschnitt 8, den Schleifabschnitten 8, 8' und 8" sowie zwischen dem Schleifabschnitt 8" und dem am zweiten Anschlussteil 7 befestigten weiteren Schleifleitungsprofil überfahren.

Entsprechendes gilt auch für den Fall der zusätzlichen oder reinen Datenübertragung für eine im Längsschlitz 3 geführte Antenne, welche in den als U- bzw. trogförmigen Schleifabschnitten 8, 8', 8" ausgebildeten Längsschlitzen verfahrbar ist, welche folglich eine hierfür notwendige Mindesttiefe aufweisen.

Die elektrische Verbindung der Anschlussteile 5, 7 und des Zwischenteils 6 untereinander mit dem entsprechenden Längenausgleich wird nachfolgend im Detail, insbesondere anhand der Fig. 2 bis 5 und 8 bis 11 beschrieben.

Wie aus Fig. 2 und 3 erkennbar, sind im oberen Bereich des erstes Anschlussteils 5 in Längsrichtung L verlaufende und zum Zwischenteil 6 weisende Steckerbuchsenaufnahmen 14a, 14b quer zur Längsrichtung L seitlich des Längsschlitz des 8 stirnseitig in das Anschlussteil 5 eingebracht. Die Steckerbuchsenaufnahmen 14a, 14b sind mindestens so tief wie ein zwischen dem erstes Anschlussteil 5 und dem Zwischenteil 6 gewünschter maximaler erster Dehnspalt D1. In die Steckerbuchsenaufnahmen 14a, 14b sind jeweils mit einem Außengewinde versehene Steckerbuchsen 15a, 15b eingeschraubt, welche einen hohlzylindrischen Innenraum aufweisen. Entsprechend weist auch das zweite Anschlussteil 7 entsprechende Steckerbuchsenaufnahmen 14c, 14d auf, in welche Außengewinde und einen hohlzylindrischen Innenraum aufweisende Steckerbuchsen 15d, 15c eingeschraubt sind.

Im Zwischenteil 6 sind dann Steckeraufnahmen 16, 17 jeweils quer zur Längsrichtung L seitlich des Längsschlitzes 8" eingebracht. Dabei sind die Steckeraufnahmen 16, 17 vorliegen als Durchgangsbohrungen ausgebildet, um ein exaktes Fluchten auf beiden Seiten leicht zu ermöglichen. Gegebenenfalls können stattdessen auch Sacklochbohrungen anstelle der Durchgangsbohrungen eingebracht werden.

In die Steckeraufnahmen 16, 17 sind mit Außenlamellenkontakten versehene Stecker 18a-d, sogenannte Einschraubstecker eingeschraubt, deren Steckkontakt nach außen und zum jeweiligen Anschlussteil 5, 7 weisen. Zum Einschrauben in die Steckeraufnahmen 16, 17 weisen die Stecker 18a-d an ihrem in Längsrichtung L dem Verbindungsendende entgegengesetzten Ende Außengewinde 19a-d auf. Mittels vorliegend als Außensechskant ausgebildeten Einschraubhilfen 20a-d können die Stecker 18a-d dann einfach in die Steckeraufnahmen 16, 17 eingeschraubt werden. Da die Stecker 18a-d wie auch das Zwischenteil 6 aus elektrisch leitendem Material bestehen, wird durch das oben beschriebene Einschrauben auch der elektrische Kontakt zum Zwischenteil 6 hergestellt.

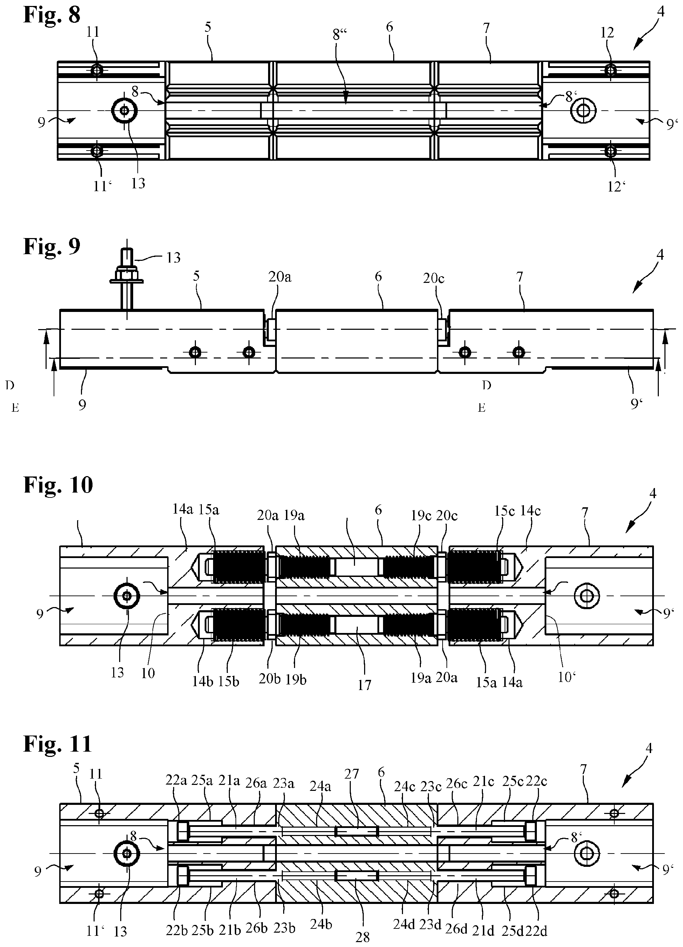

Zur elektrischen Verbindung mit den Anschlussteilen 5, 7 werden die Stecker 18a-d in die hieran angepassten Steckerbuchsen 15a-d eingesteckt werden. Dabei sind die Stecker 18a-d mindestens so lang, dass sie bei dem in Fig. 2-5 gezeigten maximal auseinandergezogenen Dehnverbinder 4 zumindest mit ihren vorderen Enden noch in die Steckerbuchsen 15a-d eingreifen. Wie aus Fig. 9 gut erkennbar, wir die maximale Länge der Stecker 18a-d dann begrenzt durch die Länge der Steckerbuchsenaufnahmen 14a-d. Diese können ggf. auch aneinander angepasst werden.

Wie insbesondere in Fig. 2, 3 und 8 gut zu erkennen, weisen die Anschlussteile 5 und 7 jeweils im Bereich der Einschraubhilfen 20a-d in Längsrichtung L einen Rücksprung auf, um die Anschlussteile 5,7 mit dem unterhalb der Rücksprünge liegenden Vorsprung direkt an das Zwischenteil 6 anlegen zu können. Wird für die Stecker 18a-d eine andere Ausgestaltung gewählt, beispielsweise ohne Einschraubhilfe 20a-d, so können diese Rücksprunge gegebenenfalls auch vermieden werden.

Die mechanische Verbindung der Anschlussteile 5, 7 und des Zwischenteils 6 untereinander mit Bereitstellung des Längenausgleichs wird nachfolgend im Detail, insbesondere anhand der Fig. 2, 3, 5 und 10 beschrieben.

Um zu verhindern, dass bei einer zu großen Längenstauchung der mit dem Dehnverbinder 4 verbundenen Schleifleitungsprofile 2 zwischen dem ersten Anschlussteil 5 und dem zweiten Anschlussteil 7 die Stecker 18a-d aus den Steckerbuchsen 15a-d herausgezogen werden, sind insbesondere in Fig. 3, 5 und 10 gut erkennbare, in Längsrichtung L verlaufenden Anschlagselemente 21a-d vorgesehen. Die Anschlagselemente 21a-d sind vorliegend als Schaftschrauben ausgebildet, könne aber auch anders ausgestaltet sein, beispielsweise als Schrauben mit durchgehendem Gewinde. Die Anschlagselemente 21a-d weisen als Schraubenkopf ausgebildete Anschläge 22a-d auf, an die sich gewindelose Gleitabschnitte 23a-d und dann als Schraubgewinde ausgebildete Befestigungsabschnitte 24a-d anschließen. Die Anschlagselemente 21a-d werden von den Schleifleitungsprofilaufnahmen 9 bzw. 9' aus gesehen durch in Längsrichtung L verlaufende Anschlagskanäle 25a-d und sich daran in Längsrichtung L zum Zwischenelement 6 hin anschließenden Führungskanäle 26a-d durchgesteckt, und dann mit den Befestigungsabschnitten 24a-d in entsprechende, hier als Durchgangsbohrungen im Zwischenteil 6 ausgebildete Befestigungsaufnahmen 27, 28 geschraubt.

Um eine gute Führung der Anschlussteile 5, 6 und des Zwischenteils 6 in Längsrichtung zueinander zu ermöglichen, können die Anschlagselemente 21a-d wie auch die entsprechenden Anschlagskanäle 25a-d, Führungskanäle 26a-d sowie Befestigungsaufnahmen 27, 28, in Längsrichtung L möglichst gut aufeinander ausgerichtet sein. Weiter sind die Außenquerschnitte der Führungskanäle 26a-d und der Anschlagselemente 21a-d so aneinander angepasst, dass die Anschlagselemente 21a-d einerseits gut in den Führungskanälen 26a-d gleiten können, und zum anderen aber möglichst geringes Spiel, insbesondere quer zur Längsrichtung L aufweisen. Hierbei sind auch die am Einsatzort der Schleifleitung typischen Temperaturen bzw. Temperaturunterschiede zu beachten, sodass sich die Führungskanäle 26a-d bei niedrigen Temperaturen nicht so weit zusammenziehen, dass die Anschlagselemente 21a-d darin nicht mehr gleiten können. Entsprechendes gilt bei hohen Temperaturen, bei denen die Ausdehnung der Gleitabschnitte 23a-d der Anschlagselemente 21a-d nicht stärker sein darf als die der Führungskanäle 26a-d. Vorteilhaft können die Anschlagselemente 21a-d und die Anschlussteile 5, 7 aus demselben Material oder aus Materialien mit gleichem oder ähnlichem Wärmeausdehnungsverhalten gefertigt werden.

Um ein Herausziehen der Stecker 18a-d aus den Steckerbuchsen 15a-d zu verhindern, ist die Länge der Führungskanäle 26a-d so bemessen, dass in der vollständig ausgezogenen Stellung des Dehnverbinders 4 wie in Fig. 5 gezeigt die Anschläge 22a-d der Anschlagselemente 21a-d an den durch den Übergang zwischen den Anschlagskanälen 25a-d und den Führungskanälen 26a-d gebildeten Halteanschlägen anschlagen. Dabei kann bei der Montage der Schleifleitung 1 abhängig von den äußeren Gegebenheiten vor Ort der maximale erste bzw. zweite Dehnspalt D1, D2 noch durch die Einschraubtiefe der Anschlagselemente 21a-d in die Befestigungsaufnahmen 27, 28 angepasst werden.

Um bei dem in Fig. 10 gezeigten vollständig zusammengeschobenen Dehnverbinder 4 ein Anschlagen der Anschläge 22a-d an die in die Schleifleitungsprofilaufnahmen 9, 9' eingesetzten Schleifleitungsprofile 2 zu verhindern, sind die Anschlagskanäle 25a-d so lange auszubilden, dass die Anschläge 22a-d nicht daraus hervorstehen.

Die gute Führung der Anschlussteile 5, 6 und des Zwischenteils 6 in Längsrichtung zueinander kann aber auch durch die elektrischen Steckverbindungen, also die Steckerbuchsen 15a-d und die Stecker 18a-d gewährleistet werden, welche dann bevorzugt mit entsprechenden geringen Toleranzen ausgeführt werden können.

Dabei bietet die oben beschriebene Ausgestaltung den Vorteil, dass der im Stand der Technik notwendige lange Dehnspalt auf zwei kürzere Dehnspalte D1, D2 aufgeteilt werden kann, wodurch der Schleifkontakt besser geführt und evtl. Unterbrechungen oder Abschwächungen der elektrischen Übertragung vermieden werden können. Ggf. können die beiden Dehnspalte D1 und D2 auch länger gemacht werden, so dass größere Längenausdehnungen bzw. -stauchungen der Schleifleitung 2 bei dennoch kompaktem Dehnverbinder 4 bereitgestellt werden können. Hierdurch können die durch den Dehnverbinder 4 verbundenen Abschnitte der Schleifleitung 1 länger gemacht werden, so dass bei gleicher Länge insgesamt weniger Dehnverbinder 4 benötigt werden.

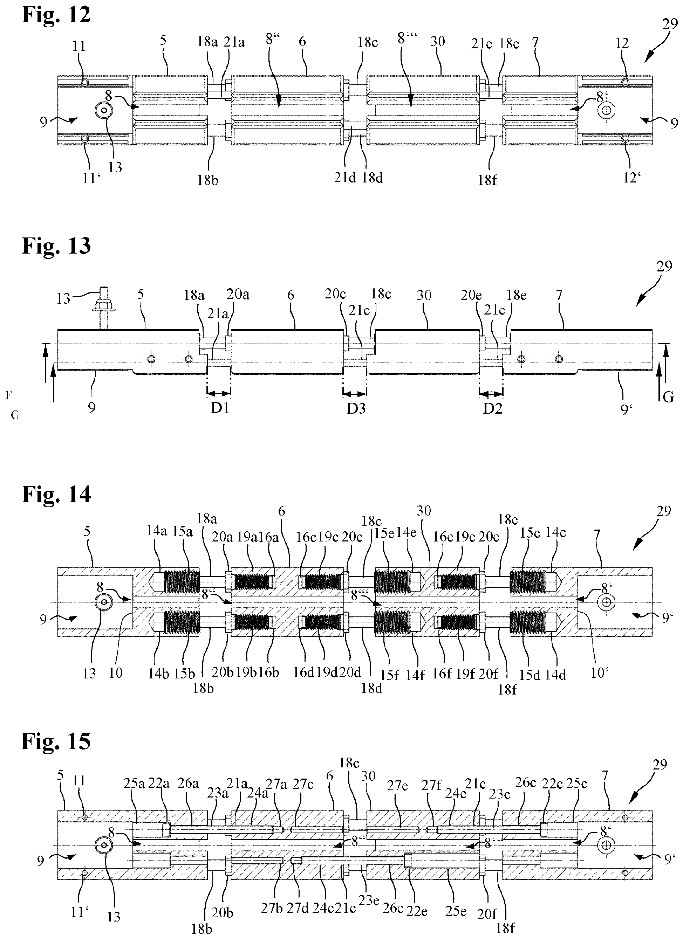

Um diesen Vorteil weiter zu erhöhen, kann auch ein in Fig. 12 bis 15 gezeigter alternativer Dehnverbinder 29 verwendet werden, der sich im wesentlichen dadurch von dem in Fig. 1 bis 11 gezeigten unterscheidet, dass dort zwischen das Zwischenteil 6 und das zweite Anschlussteil 7 der oben beschriebenen Ausgestaltung ein weiteres Zwischenteil 30 eingefügt ist, um einen dritten maximalen Dehnspalt D3 bereitzustellen, und dass die Ausgestaltung der Anschlagselemente geringfügig unterschiedlich ist. Es wird deshalb nachfolgend vor allem auf die Unterschiede der beiden Ausführungen eingegangen, während gleiche Teile wieder gleiche Bezeichnungen und gleiche Bezugszeichen aufweisen. Auch gelten die Ausführungen zu dem obigen Ausführungsbeispiel, insbesondere der Funktion, Ausgestaltung, Materialwahl etc. der einzelnen Bauteile, entsprechend bei dem hier beschriebenen und umgekehrt.

Das weitere Zwischenteil 30 unterscheidet sich von dem Zwischenteil 6 vor allem dadurch, dass es zur Verbindung mit den Steckern 18c, 18d des Zwischenteils 6 auf der einen Seite und zur Verbindung mit den Steckerbuchsen 15c, 15d des zweiten Anschlussteils 7 auf der anderen Seite angepasst ist. Dabei entspricht die Ausgestaltung der Verbindungen grundsätzlich den oben beschriebenen, wobei das weitere Zwischenteil 30 hierzu auf der einen, in den Zeichnungen linken Stirnseite in Längsrichtung L verlaufende, hier jedoch als Sacklochbohrungen ausgebildete Steckerbuchsenaufnahmen 14e, 14f aufweist, in welche Steckerbuchsen 15e, 15f eingefügt sind. Auf der gegenüberliegenden, dem zweiten Anschlussteil 7 zugewandten Stirnseite des weiteren Zwischenteils 30 sind dann als Gegenpart zu den Steckerbuchsen 15c, 15d des zweiten Anschlussteils 7 wieder Stecker 18e, 18f in hier als Sacklochbohrungen ausgebildete Steckeraufnahmen 16e, 16f eingeschraubt. Bis auf die Ausgestaltung der Steckerbuchsenaufnahmen 14e, 14f bzw. der Steckeraufnahmen 16e, 16f als Sacklochbohrungen entspricht die Ausgestaltung der Steckverbindungen des weiteren Zwischenteils 30 den oben beschriebenen.

Weiter weist das weitere Zwischenteil 30, wie in Fig. 15 gut erkennbar, wieder Befestigungsaufnahmen 27e, 27f auf, welche hier jedoch nicht als Durchgangsbohrungen, sondern als Sacklochbohrungen ausgebildet sind. Ansonsten gleichen die Befestigungsaufnahmen 27e, 27f den oben beschriebenen in Form und Funktion. Dabei ist das Anschlagselement 21c des zweiten Anschlussteils 7 in die Befestigungsaufnahme 27f eingeschraubt, um ein vollständiges Auseinanderziehen des weiteren Zwischenteils 30 und des zweiten Anschlusselements 7 zu verhindern. Gegebenenfalls können aber auch wieder Durchgangsbohrungen anstelle der Sacklochbohrungen vorgesehen werden.

Anders als das Zwischenteil 6 weist das weitere Zwischenteil 30 jedoch nur die zwei einander gegenüberliegenden Befestigungsaufnahmen 27e, 27f auf, während in dem in Fig. 15 unteren Bereich ein Anschlagskanal 25e und ein Führungskanal 26e für ein Anschlagselemente 21e vorgesehen ist, um ein vollständiges Auseinanderziehen des Zwischenteils 6 und des weiteren Zwischenteils 30 zu verhindern.

Bei den Ausführungsbeispielen kann ggf. die Position der Anschlagselemente 21a-e und der zugehörigen Teile mit der Position der Stecker 18a-f im Dehnverbinder 4 bzw. 29 vertauscht werden, ggf. auch nur die Position auf einer Seite des Längsschlitzes 8, 8' bzw. 8" quer zur Längsrichtung L. Auch kann die Anordnung einiger oder aller Steckerbuchsen 15a-f und der entsprechenden Stecker 18a-18f vertauscht werden. Beispielsweise können die Steckerbuchsen 15a-d an dem Zwischenteil 6 und die entsprechenden Stecker 18a-18d an den Anschlussteilen 5, 7 angeordnet werden. Entsprechende Anpassungen können auch beim alternativen, mehrteiligen Dehnverbinder 29 Ausführungsbeispiel der Fig. 11 bis 15 vorgenommen werden.

Anstelle der oben beschriebenen Stecker 18a-f mit Außenlamellenkontakten können auch andere geeignete elektrische Kontakte verwendet werden, u.a. Drahtfederkontakte oder Federkorbkontakte. Auch können die Kontakte in den Steckerbuchsen 15a-f und nicht an den Steckern 18a-f vorgesehen werden, beispielsweise als Innenlamellenkontakt. Auch Kombination davon sind denkbar.

Entsprechend können anstelle der beiden Zwischenteile 6, 30 der Ausführung nach Fig. 12 bis 15 auch weitere zusätzliche Zwischenteile vorgesehen werden, um den maximalen Dehnweg noch weiter zu vergrößern. Dort können dann wieder entsprechend ausgestaltete Steckverbindungen und Anschlagsverbindungen wie oben beschrieben vorgesehen werden.

### Bezugszeichen

- 1: Schleifleitung
- 2: erstes Schleifleitungsprofil
- 3: Längsschlitz, trogförmiger Schleifabschnitt
- 4: Dehnverbinder
- 5: erstes Anschlussteil
- 6: Zwischenteil
- 7: zweites Anschlussteil
- 8, 8', 8", 8‴: trogförmige Schleifabschnitte Anschlussteile, Zwischenteile
- 9, 9': Schleifleitungsprofilaufnahmen
- 10, 10': Stirnwände Schleifleitungsprofilaufnahmen
- 11, 11': Befestigungsschrauben/-bohrungen für Schleifleitungsprofil
- 12, 12': Befestigungsschrauben/-bohrungen für Schleifleitungsprofil
- 13: Montierschraube
- 14a-f: Steckerbuchsenaufnahmen Anschlussteile bzw. zweites Zwischenteil
- 15a-f: Steckerbuchsen mit Außengewinde und Innenlamellenkontakten
- 16, 17: Steckeraufnahmen (Durchgangsbohrungen)
- 16a-f: Steckeraufnahmen (Sacklochbohrungen)
- 18a-f: Stecker mit Außenlamellenkontakten (Einschraubstecker)
- 19a-f: Schraubgewinde
- 20a-f: Einschraubhilfe (Außensechskant)
- 21a-e: Anschlagselemente (Schaftschraube) Anschlussteile, zweites Zwischenteil
- 22a-e: Anschläge Anschlagselemente (Schraubenkopf)
- 23a-e: Gleitabschnitte Anschlagselemente (gewindeloser Schraubenschaft)
- 24a-e: Befestigungsabschnitte Anschlagselemente (Schraubengwinde)
- 25a-e: Anschlagskanäle Anschlussteile bzw. zweites Zwischenteil
- 26a-e: Führungskanäle Anschlussteile bzw. zweites Zwischenteil
- 27, 28: Befestigungsaufnahmen für Anschlagselemente (Durchgangsbohrungen)
- 27a-f: Befestigungsaufnahmen für Anschlagselemente (Sacklochbohrungen)
- 29: alternativer Dehnverbinder
- 30: weiteres Zwischenteil alternativer Dehnverbinder

- D1, D2, D3: maximaler erster, zweiter bzw. dritter Dehnspalt
- L: Längsrichtung (Dehnrichtung) Schleifleitung

## Patentansprüche

1. Dehnverbinder (4; 29) zum Verbinden eines ersten Schleifleitungsprofils (2) einer Schleifleitung (1) mit einem sich daran in eine Längsrichtung (L) der Schleifleitung (1) anschließenden zweiten Schleifleitungsprofil der Schleifleitung (1), mit einem ersten Anschlussteil (5) zum Verbinden mit dem ersten Schleifleitungsprofil (2) und einem zweiten Anschlussteil (7) zum Verbinden mit dem zweiten Schleifleitungsprofil, **dadurch gekennzeichnet, dass** in Längsrichtung (L) zwischen dem ersten Anschlussteil (5) und dem zweiten Anschlussteil (7) mindestens ein die Anschlussteile (5, 7) elektrisch und/oder mechanisch verbindendes Zwischenteil (6; 30) derart längsverschieblich vorgesehen ist, dass zwischen dem Zwischenteil (6; 30) und dem ersten Anschlussteil (5) ein erster maximaler Dehnspalt (D1) und dem Zwischenteil (6; 30) und dem zweiten Anschlussteil (7) ein zweiter maximaler Dehnspalt (D2) einstellbar ist, wobei zwischen den Anschlussteilen (5, 7) und dem oder den Zwischenteilen (6, 30) und/oder den Zwischenteilen (6, 30) untereinander in Längsrichtung (L) bewegliche Anschlagsverbindungen (21-28) vorgesehen sind, und wobei die Anschlagsverbindungen (21-28) die Dehnspalte (D1, D2, D3) in Längsrichtung (L) begrenzende Anschläge (22a-e) aufweisen.

2. Dehnverbinder (4; 29) nach Anspruch 1, **dadurch gekennzeichnet, dass** zwischen dem Zwischenteil (6) und dem ersten Anschlussteil (5) und/oder dem zweiten Anschlussteil (7) ein oder mehrere weitere Zwischenteile (30) zur Einstellung weiterer Dehnspalte (D3) zwischen benachbarten Anschlussteilen (6, 7) und Zwischenteilen (6, 30) bzw. benachbarten Zwischenteilen (6, 30) untereinander angeordnet sind.

3. Dehnverbinder (4; 29) nach Anspruch 1 oder 2, **dadurch gekennzeichnet, dass** die Anschlagsverbindungen (21-28) jeweils einen in Längsrichtung (L) verlaufenden Führungskanal (26a-e) und einen in Längsrichtung (L) verlaufenden Anschlagskanal (25a-e) aufweisen, durch die ein in Längsrichtung (L) darin bewegliches Anschlagselement (21a-e) mit einem im Anschlagskanal (25a-e) verlaufenden Anschlag (22a-e) und einem im Führungskanal (26a-e) verlaufenden Gleitabschnitt (23a-e) vorgesehen ist.

4. Dehnverbinder (4; 29) nach Anspruch 3, **dadurch gekennzeichnet, dass** der Anschlagskanal (25a-e) im Querschnitt eine größeren Weite aufweist als der Führungskanal (26a-e) und/oder dass mindestens einer der Führungskanäle (26a-e) und Anschlagskanäle (25a-e) in dem ersten oder zweiten Anschlussteil (7) und das zugehörige Anschlagselement (21a-e) am Zwischenteil (6) angeordnet sind, oder umgekehrt.

5. Dehnverbinder (4; 29) nach einem der voranstehenden Ansprüche, **dadurch gekennzeichnet, dass** zwischen den Anschlussteilen (5, 7) und dem oder den Zwischenteilen (6, 30) und/oder den Zwischenteilen (6, 30) untereinander mindestens eine in Längsrichtung (L) bewegliche elektrische Verbindung (14-20), insbesondere Steckverbindung vorgesehen ist.

6. Dehnverbinder (4; 29) nach Anspruch 5, **dadurch gekennzeichnet, dass** die elektrische Verbindung mindestens einen an dem oder den Zwischenteilen (6; 30) angeordneten, in die Längsrichtung (L) verlaufenden Stecker (18a-f) aufweist, der in eine an einem der Anschlussteile (5, 7) angeordnete Steckerbuchse (15a-f) einsteckbar ist, oder umgekehrt, und/oder dass die elektrische Verbindung mindestens einen an einem der Zwischenteile (6; 30) angeordneten, in die Längsrichtung (L) verlaufenden Stecker (18a-f) aufweist, der in eine an einem anderen der Zwischenteile (5, 7) angeordnete Steckerbuchse (15a-f) einsteckbar ist.

7. Dehnverbinder (4; 29) nach Anspruch 6, **dadurch gekennzeichnet, dass** die Länge von Stecker (18a-f) und Steckerbuchse (15a-f) in Längsrichtung (L) so aneinander angepasst sind, dass der Stecker (18a-f) bei maximalem Dehnspalt (D1, D2, D3) zwischen dem Zwischenteil (6) und dem zugehörigen Anschlussteil (5; 7) bzw. Zwischenteil (6; 30) zumindest noch teilweise in der Steckerbuchse (15a-f) steckt.

8. Dehnverbinder (4; 29) nach Anspruch 6 oder 7, **dadurch gekennzeichnet, dass** der Stecker (18a-f) auf seiner der Steckerbuchse (15a-f) abgewandten Seite zum Einsetzen in eine entsprechende in Längsrichtung (L) verlaufende Steckeraufnahme (16, 17; 16a-f) am Zwischenteil (6) oder an einem der Anschlussteile (5; 7) ausgebildet ist.

9. Dehnverbinder (4; 29) nach Anspruch 8, **dadurch gekennzeichnet, dass** die Steckeraufnahme (16, 17; 16a-f) ein durch das Zwischenteil (6) durchgehender Kanal, insbesondere Durchgangsbohrung, oder ein einseitig offener Kanal, insbesondere Sacklochbohrung, ist.

10. Dehnverbinder (4; 29) nach Anspruch 8 oder 9, **dadurch gekennzeichnet, dass** der Stecker (18a-f) eine Einschraubhilfe (20a-f) zum Einschrauben in die Steckeraufnahme (16, 17, 16a-f) aufweist, insbesondere dass die Einschraubhilfe (20a-f) in Längsrichtung (L) über das Zwischenteil (6) oder das Anschlussteil (5, 7), in das der Stecker eingeschraubt ist, übersteht, insbesondere wobei an dem zugeordneten Anschlussteil (5, 7) oder Zwischenteil (6) in Längsrichtung (L) ein Rücksprung für die Einschraubhilfe (20a-f) vorgesehen ist.

11. Dehnverbinder (4; 29) nach einem der voranstehenden Ansprüche, **dadurch gekennzeichnet, dass** die Schleifleitungsprofile (2), das erste Anschlussteil (5), das zweite Anschlussteil (7) und das oder die Zwischenteile (6; 30) jeweils miteinander fluchtende trogförmige Schleifabschnitte (3; 8; 8'; 8"; 8‴) zur Kontaktierung mit einem in Längsrichtung (L) der Schleifleitung (1) verfahrenden Schleifkontakt aufweisen, insbesondere dass sich die Enden einer oder mehrerer der Schleifabschnitte (8; 8'; 8"; 8‴) zumindest teilweise trichterförmig aufweiten.

12. Dehnverbinder (4; 29) nach einem der voranstehenden Ansprüche, **dadurch gekennzeichnet, dass** das erste Anschlussteil (5) und das zweite Anschlussteil (7) auf ihrer in Längsrichtung (L) dem oder den Zwischenteilen (6, 30) abgewandten Seite jeweils eine Schleifleitungsprofilaufnahme (9, 9') zur Befestigung des ersten bzw. zweiten Schleifleitungsprofils (2) aufweisen.

13. Dehnverbinder (4; 29) nach Anspruch 12, **dadurch gekennzeichnet, dass** die Schleifleitungsprofilaufnahme (9, 9') quer zur Längsrichtung (L) einen an die Außenkontur des Schleifleitungsprofils (2) angepassten, insbesondere U-förmigen Querschnitt hat, und/oder dass die Schleifleitungsprofilaufnahme (9, 9') an ihrem dem oder den Zwischenteilen (6, 30) zugewandten Ende eine quer zur Längsrichtung (L) verlaufende Stirnwand (10, 10') als Längsanschlag für das aufzunehmende Schleifleitungsprofil (2) aufweist.

14. Dehnverbinder (4; 29) nach einem der voranstehenden Ansprüche, **dadurch gekennzeichnet, dass** die Schleifleitungsprofile (2) als Schlitzhohlleiter mit einem in Längsrichtung (L) verlaufenden Längsschlitz zur Aufnahme einer am Stromabnehmer angeordneten, in Längsrichtung der Schleifleitung (1) verfahrbaren Antenne ausgebildet sind, wobei Seitenwandungen des Längsschlitzes mit entsprechenden Seitenwandungen jeweils miteinander fluchtender trogförmiger Schleifabschnitte (3; 8; 8'; 8"; 8‴) des ersten Anschlussteils (5), des zweiten Anschlussteils (7) und des oder der Zwischenteile (6; 29) fluchten.

15. Schleifleitung (1) zur Versorgung eines in eine Längsrichtung (L) entlang der Schleifleitung (1) verfahrbaren elektrischen Verbrauchers mit elektrischer Energie, mit einem ersten Schleifleitungsprofil (2) und einem sich daran in die Längsrichtung (L) der Schleifleitung (1) anschließenden zweiten Schleifleitungsprofil, **dadurch gekennzeichnet, dass** das erste Schleifleitungsprofil (2) und das zweite Schleifleitungsprofil mit einem Dehnverbinder (4; 29) nach einem der voranstehenden Ansprüche verbunden sind.

## Claims

1. Expansion connector (4; 29) for connecting a first conductor line profile (2) of a conductor line (1) to a second conductor line profile of the conductor line (1) adjoining in a longitudinal direction (L) of the conductor line (1), with a first connecting part (5) for connecting to the first conductor line profile (2) and a second connecting part (7) for connecting to the second conductor line profile, **characterized in that**, in the longitudinal direction (L) between the first connecting part (5) and the second connecting part (7), at least one intermediate part (6; 30) connecting the connecting parts (5, 7) electrically and/or mechanically is provided longitudinally movable such that a first maximum extension gap (D1) can be provided between the intermediate part (6; 30) and the first connecting part (5) and a second maximum extension gap (D2) can be provided between the intermediate part (6; 30) and the second connecting part (7), whereby between the connecting parts (5, 7) and the intermediate part or parts (6, 30) and/or between the intermediate parts (6, 30) amongst each others stop connections (21-28) are provided that are movable in the longitudinal direction (L) among themselves, and where the stop connections (21-28) have stops (22a-e) delimiting the extension gaps (D1, D2, D3) in the longitudinal direction (L).

2. Expansion connector (4; 29) according to claim 1, **characterized in that** between the intermediate part (6) and the first connecting part (5) and/or the second connecting part (7) one or more additional intermediate parts (30) are arranged for setting additional extension gaps (D3) between adjacent connecting parts (6, 7) and intermediate parts (6, 30) or adjacent intermediate parts (6, 30).

3. Expansion connector (4; 29) according to claim 1 or 2, **characterized in that** the stop connections (21-28) each have a guide channel (26a-e) extending in the longitudinal direction (L) and a stop channel (25a-e) extending in the longitudinal direction (L) (25a-e), through which a stop element (21a-e) movable in the longitudinal direction (L) is provided with a stop (22a-e) extending in the stop channel (25a-e) and a sliding section (23a-e) extending in the guide channel (26a-e).

4. Expansion connector (4; 29) according to claim 3, **characterized in that** the stop channel (25a-e) has a larger cross-sectional width than the guide channel (26a-e) and/or that at least one of the guide channels (26a-e) and stop channels (25a-e) are arranged in the first or second connecting part (7) and the associated stop element (21a-e) is arranged on the intermediate part (6), or in a contrary manner.

5. Expansion connector (4; 29) according to one of the preceding claims, **characterized in that** at least one electrical connection (14-20), in particular a plug connection, is provided movable in the longitudinal direction (L) among the connecting parts (5, 7) and the intermediate part or parts (6, 30) and/or between the intermediate parts (6, 30).

6. Expansion connector (4; 29) according to claim 5, **characterized in that** the electrical connection has at least one plug (18a-f) extending in the longitudinal direction (L) and arranged on the intermediate part or parts (6; 30), which can be plugged into a plug socket (15a-f) arranged on one of the connection parts (5, 7), or in a contrary manner, and/or that the electrical connection has at least one plug (18a-f) extending in the longitudinal direction (L) and arranged on one of the intermediate parts (6; 30), which can be inserted into a plug socket (15a-f) arranged on another of the intermediate parts (5, 7).

7. Expansion connector (4; 29) according to claim 6, **characterized in that** the length of the plug (18a-f) and the plug socket (15a-f) are adapted to each other in the longitudinal direction (L) in such a way that, at maximum extension gap (D1, D2, D3) between the intermediate part (6) and the respective connection part (5; 7) or respective intermediate part (6; 30), the plug (18a-f) is at least partially inserted into the plug socket (15a-f).

8. Expansion connector (4; 29) according to claim 6 or 7, **characterized in that** on its side facing away from the plug socket (15a-f), the plug (18a-f) is configured on the intermediate part (6) or on one of the connection parts (5; 7) for insertion into a corresponding plug receptacle (16, 17; 16a-f), that is extending in the longitudinal direction (L).

9. Expansion connector (4; 29) according to claim 8, **characterized in that** the plug receptacle (16, 17; 16a-f) is a channel, in particular a through-hole, extending through the intermediate part (6), or a channel open on one side, in particular a blind hole.

10. Expansion connector (4; 29) according to claim 8 or 9, **characterized in that** the plug (18a-f) comprises a screw-in aid (20a-f) for screwing into the plug receptacle (16, 17, 16a-f), in particular **in that** the screw-in aid (20a-f) protrudes in the longitudinal direction (L) beyond the intermediate part (6) or the connecting part (5, 7) into which the plug is screwed, in particular wherein a recess for the screw-in aid (20a-f) is provided on the associated connecting part (5, 7) or intermediate part (6) in the longitudinal direction (L).

11. Expansion connector (4; 29) according to one of the preceding claims, **characterized in that** the conductor line profiles (2), the first connecting part (5), the second connecting part (7) and the intermediate part or parts (6; 30) each have aligning trough-shaped conductor sections (3; 8; 8'; 8"; 8"') for contacting a sliding contact moving in the longitudinal direction (L) of the conductor line (1), in particular that the ends of one or more of the conductor sections (8; 8'; 8"; 8‴) widen at least partially in a funnel shape.

12. Expansion connector (4; 29) according to one of the preceding claims, **characterized in that** the first connecting part (5) and the second connecting part (7) each comprise a conductor line profile receptacle (9, 9') on its side facing away from the intermediate part or parts (6; 30) in its longitudinal direction (L) for fastening the first or second conductor line profile (2).

13. Expansion connector (4; 29) according to claim 12, **characterized in that** the conductor line profile receptacle (9, 9') has a cross-section transverse to the longitudinal direction (L) which is adapted to the outer contour of the conductor line profile (2), in particular a U-shaped cross-section, and/or **in that** the conductor line profile receptacle (9, 9') has an end wall (10, 10') extending transversely to the longitudinal direction (L) at its end facing the intermediate part(s) (6, 30) as a longitudinal stop for the conductor line profile (2) to be accommodated.

14. Expansion connector (4; 29) according to one of the preceding claims, **characterized in that** the conductor line profiles (2) are configured as slotted waveguide with a longitudinal recess extending in the longitudinal direction (L) for receiving an antenna arranged on the current collector and movable in the longitudinal direction of the conductor line (1), wherein side wallings of the longitudinal recess are aligned with corresponding side wallings of respective aligning trough-shaped conductor sections (3; 8; 8'; 8" 8"') of the first connecting part (5), the second connecting part (7) and the intermediate part or parts (6; 29).

15. Conductor line (1) for supplying electrical energy to an electrical consumer that is movable in a longitudinal direction (L) along the conductor line (1), with a first conductor line profile (2) and a second conductor line profile connected to it in the longitudinal direction (L) of the conductor line (1), **characterized in that** the first conductor line profile (2) and the second conductor line profile are connected by an expansion connector (4; 29) according to one of the preceding claims.

## Revendications

1. Connecteur extensible (4 ; 29) pour la connexion d'un premier profil de ligne de contact (2) d'une ligne de contact (1) à un second profil de ligne de contact de la ligne de contact (1) qui s'y raccorde dans une direction longitudinale (L) de la ligne de contact (1), comportant une première partie de raccordement (5) pour la connexion avec le premier profil de ligne de contact (2) et une seconde partie de raccordement (7) pour la connexion avec le second profil de ligne de contact, **caractérisé en ce qu'**au moins une partie intermédiaire (6 ; 30) connectée de manière électrique et/ou mécanique à la partie de raccordement (5, 7) est prévue de manière à pouvoir se déplacer longitudinalement dans la direction longitudinale (L) entre la première partie de raccordement (5) et la seconde partie de raccordement (7), de telle sorte qu'une première fente d'extension maximale (D1) peut être réglée entre la partie intermédiaire (6 ; 30) et la première partie de raccordement (5) et qu'une seconde fente d'extension maximale (D2) peut être réglée entre la partie intermédiaire (6 ; 30) et la seconde partie de raccordement (7), dans lequel des liaisons à butées (21-28) mobiles dans la direction longitudinale (L) sont prévues entre les parties de raccordement (5, 7) et la ou les parties intermédiaires (6, 30) et/ou les parties intermédiaires (6, 30) entre elles, et dans lequel les liaisons à butées (21-28) présentent des butées (22a-e) limitant les fentes d'extension (D1, D2, D3) dans la direction longitudinale (L).

2. Connecteur extensible (4 ; 29) selon la revendication 1,
**caractérisé en ce qu'**entre la partie intermédiaire (6) et la première partie de raccordement (5) et/ou la seconde partie de raccordement (7) sont disposées une ou plusieurs autres parties intermédiaires (30) pour le réglage d'autres fentes d'extension (D3) entre des parties de raccordement (6, 7) voisines et des parties intermédiaires (6, 30) ou des parties intermédiaires (6, 30) voisines entre elles.

3. Connecteur extensible (4 ; 29) selon la revendication 1 ou 2,
**caractérisé en ce que** les liaisons à butées (21-28) présentent respectivement un canal de guidage (26a-e) s'étendant dans la direction longitudinale (L) et un canal pour butée (25a-e) s'étendant dans la direction longitudinale (L), à travers lesquels est prévu un élément à butée (21a-e) mobile dans la direction longitudinale (L) dans celui-ci et comportant une butée (22a-e) s'étendant dans le canal pour butée (25a-e) et une section coulissante (23a-e) s'étendant dans le canal de guidage (26a-e).

4. Connecteur extensible (4 ; 29) selon la revendication 3,
**caractérisé en ce que** le canal pour butée (25a-e) présente en section transversale une largeur supérieure à celle du canal de guidage (26a-e) et/ou **en ce qu'**au moins l'un parmi les canaux de guidage (26a-e) et les canaux pour butées (25a-e) est disposé dans la première ou la seconde partie de raccordement (7) et l'élément à butée (21a-e) associé est disposé sur la partie intermédiaire (6), ou inversement.

5. Connecteur extensible (4 ; 29) selon l'une des revendications précédentes, **caractérisé en ce qu'**est prévue entre les parties de raccordement (5, 7) et la ou les parties intermédiaires (6, 30) et/ou les parties intermédiaires (6, 30) entre elles au moins une connexion électrique (14-20) mobile dans la direction longitudinale (L), en particulier une connexion par enfichage.

6. Connecteur extensible (4 ; 29) selon la revendication 5,
**caractérisé en ce que** la connexion électrique présente au moins une fiche (18a-f) disposée sur la ou les parties intermédiaires (6 ; 30) et s'étendant dans la direction longitudinale (L), laquelle fiche peut être enfichée dans une douille de fiche (15a-f) disposée sur l'une des parties de raccordement (5, 7), ou inversement, **et/ou en ce que** la connexion électrique présente au moins une fiche (18a-f) disposée sur l'une des parties intermédiaires (6 ; 30) et s'étendant dans la direction longitudinale (L), laquelle fiche peut être enfichée dans une douille de fiche (15a-f) disposée sur une autre des parties intermédiaires (5, 7).

7. Connecteur extensible (4 ; 29) selon la revendication 6,
**caractérisé en ce que** les longueurs de la fiche (18a-f) et de la douille de fiche (15a-f) sont adaptées l'une à l'autre dans la direction longitudinale (L) de sorte que la fiche (18a-f) s'enfiche au moins encore partiellement dans la douille de fiche (15a-f) dans le cas d'une fente d'extension maximale (D1, D2, D3) entre la partie intermédiaire (6) et la partie de raccordement (5 ; 7) associée ou la partie intermédiaire (6 ; 30).

8. Connecteur extensible (4 ; 29) selon la revendication 6 ou 7,
**caractérisé en ce que** la fiche (18a-f) est réalisée, sur son côté opposé à la douille de fiche (15a-f), pour être insérée dans un logement pour fiche (16, 17 ; 16a-f) correspondant s'étendant dans la direction longitudinale (L) sur la partie intermédiaire (6) ou sur l'une des parties de raccordement (5 ; 7).

9. Connecteur extensible (4 ; 29) selon la revendication 8,
**caractérisé en ce que** le logement pour fiche (16, 17 ; 16a-f) est un canal traversant la partie intermédiaire (6), en particulier un trou traversant, ou un canal ouvert d'un côté, en particulier un trou borgne.

10. Connecteur extensible (4 ; 29) selon la revendication 8 ou 9, **caractérisé en ce que** la fiche (18a-f) présente une aide au vissage (20a-f) pour le vissage dans le logement pour fiche (16, 17, 16a-f), en particulier **en ce que** l'aide au vissage (20a-f) dépasse, dans la direction longitudinale (L), de la partie intermédiaire (6) ou de la partie de raccordement (5, 7) dans laquelle la fiche est vissée, en particulier dans lequel un retrait pour l'aide au vissage (20a-f) est prévu dans la direction longitudinale (L) sur la partie de raccordement (5, 7) ou la partie intermédiaire (6) associée.

11. Connecteur extensible (4 ; 29) selon l'une des revendications précédentes, **caractérisé en ce que** les profils de ligne de contact (2), la première partie de raccordement (5), la seconde partie de raccordement (7) et la ou les parties intermédiaires (6 ; 30) présentent des sections de contact (3 ; 8 ; 8' ; 8" ; 8‴) en forme d'auge respectivement alignées les unes avec les autres pour la mise en contact avec un contact à frottement se déplaçant dans la direction longitudinale (L) de la ligne de contact (1), **en particulier en ce que** les extrémités d'une ou de plusieurs des sections de contact (8 ; 8' ; 8" ; 8‴) s'élargissent au moins partiellement en forme d'entonnoir.

12. Connecteur extensible (4 ; 29) selon l'une des revendications précédentes, **caractérisé en ce que** la première partie de raccordement (5) et la seconde partie de raccordement (7) présentent, sur leur côté opposé à la ou aux parties intermédiaires (6, 30) dans la direction longitudinale (L), respectivement un logement pour profil de ligne de contact (9, 9') pour la fixation du premier ou du second profil de ligne de contact (2).

13. Connecteur extensible (4 ; 29) selon la revendication 12,
**caractérisé en ce que** le logement pour profil de ligne de contact (9, 9') possède, transversalement à la direction longitudinale (L), une section transversale adaptée au contour extérieur du profil de ligne de contact (2), en particulier en forme de U, **et/ou en ce que** le logement pour profil de ligne de contact (9, 9') présente, à son extrémité tournée vers la ou les parties intermédiaires (6, 30), une paroi frontale (10, 10') s'étendant transversalement à la direction longitudinale (L) et servant de butée longitudinale pour le profil de ligne de contact (2) à recevoir.

14. Connecteur extensible (4 ; 29) selon l'une des revendications précédentes, **caractérisé en ce que** les profils de ligne de contact (2) sont réalisés sous forme de guide d'ondes à fente comportant une fente longitudinale s'étendant dans la direction longitudinale (L) pour la réception d'une antenne disposée sur le conducteur et pouvant être déplacée dans la direction longitudinale de la ligne de contact (1), dans lequel des parois latérales de la fente longitudinale sont alignées avec des parois latérales correspondantes de sections de contact (3 ; 8 ; 8' ; 8" ; 8"') en forme d'auge respectivement alignées les unes avec les autres de la première partie de raccordement (5), de la seconde partie de raccordement (7) et de la ou des parties intermédiaires (6 ; 29).

15. Ligne de contact (1) pour l'alimentation en énergie électrique d'un consommateur électrique pouvant être déplacé dans une direction longitudinale (L) le long de la ligne de contact (1), comportant un premier profil de ligne de contact (2) et un second profil de ligne de contact s'y raccordant dans la direction longitudinale (L) de la ligne de contact (1), **caractérisée en ce que** le premier profil de ligne de contact (2) et le second profil de ligne de contact sont connectés par un connecteur extensible (4 ; 29) selon l'une des revendications précédentes.
